# EUROPEAN PATENT SPECIFICATION

(11) **EP 3 929 015 B1**
(45) Date of publication and mention of the grant of the patent: **20.09.2023**
(21) Application number: 21175898.2
(22) Date of filing: 26.05.2021
(51) Int. Cl.: B60K 15/04, B62H 5/00, B62J 35/00, B62J 99/00

(54) **STRADDLED VEHICLE CAP FOR FUEL TANK**
VERSCHLUSS FÜR KRAFTSTOFFTANK EINES GRÄTSCHSITZFAHRZEUGS
BOUCHON POUR RÉSERVOIR DE CARBURANT D'UN VÉHICULE À ENFOURCHER

(30) Priority: 23.06.2020 JP 2020107786
(43) Date of publication of application: 29.12.2021
(73) Proprietor: YAMAHA HATSUDOKI KABUSHIKI KAISHA, Iwata-shi, Shizuoka 438-8501 (JP)
(72) Inventor: TACHIBANA, Masumi, Shizuoka-ken, 4388501 (JP)
(74) Representative: Marks & Clerk LLP

(56) References cited:
- JP-A- 2017 196 951
- US-A1- 2010 156 118

## Description

### FIELD OF INVENTION

The present invention relates to a straddled vehicle comprising or including a keyless entry system.

### BACKGROUND TO INVENTION

A straddled vehicle is equipped with a fuel tank. For example, in a straddled vehicle disclosed in Japan Patent Laid-Open Publication No. JP-A-2015-89713 (YAMAHA MOTOR), a fuel tank is arranged in front of a seat. A fuel filler port is provided on an upper surface of the fuel tank, and the fuel filler port is opened and closed by a cap. A vehicle body cover is arranged above the fuel tank. The cap is located on an upper surface of the vehicle body cover. A key cylinder is attached to the cap, and the cap is locked by the key cylinder. A rider unlocks the cap by inserting a key into a keyhole of the key cylinder and twisting the key.

In recent years, a keyless entry system has been installed in straddled vehicles. The keyless entry system authenticates a transmitter by a radio wave from the transmitter carried by the rider, and unlocks the fuel filler cap without a key operation. For example, a fuel tank cap locking device disclosed in Japan Patent Laid-Open Publication No. JP-A-2010-125864 (ASAHI DENSO) includes a cap, a support, a solenoid, a locking means, a receiving means, and a determining means. The cap is rotatably attached to the support via a hinge. The solenoid and the locking means are attached to the support. The locking means locks the cap by protruding from the support toward the cap to lock the cap. The receiving means receives an identification code from the transmitting means carried by the rider. When the determination means determines that the identification code is appropriate for the vehicle, the locking means is moved by the solenoid. As a result, the cap is unlocked.

In the keyless entry system as described above, devices such as the solenoid and the locking means are arranged near the fuel tank. Therefore, a large gap is required between the fuel tank and the vehicle body cover, and the vehicle becomes large in the vicinity of the fuel tank. Alternatively, a capacity of the fuel tank is reduced in order to secure a space for the above-mentioned devices while preventing the vehicle from becoming larger. Alternatively, components around the fuel tank, such as the seat and the storage box under the seat, become smaller.

Further, in the above system, the lock is released by the rider operating the operating means to release the lock. Therefore, the rider needs to operate the operating means before opening the cap, which increases the number of steps for opening the cap.

It is an object of at least one embodiment of at least one aspect of the present invention to seek to obviate or at least mitigate one or more problems or disadvantages in the prior art.

An object of at least one embodiment of at least one aspect of the present invention is to seek to reduce a size of a structure around a fuel tank and improve an operability for opening a cap in a straddled vehicle provided with a keyless entry system.

JP 2017 196951 A (ASAHI DENSO CO LTD) describes a fuel tank cap locking device provided with: a cap that can open/close an oil supply port; an operation knob that can be operated by an operator; engaging means that is operated between an engagement position to maintain the state of covering the oil supply port with the cap and a permission position to permit the opening operation of the cap by releasing the engagement; and locking means that can permit the operation of the engaging means from the engagement position to the permission position by locking the operation of the engaging means from the engagement position to the permission position or by releasing the locking means, and characterized by being provided with a damper spring that can absorb the operation force of the operation knob without transmitting it to the engaging means when the locking means locks the engaging means.

US 2010/0156118 A1 CODELUPPI ET AL describes a cap for fuel tanks, in particular for motorcycles, comprising: an annular body, predisposed to be fixed stably on board an access opening of a tank, which access opening delimits a through-opening through which the tank can be accessed; a lid, constrained rotatably to the annular body, which is rotatable between an open position, in which the through-opening can be accessed, and a closed position, in which the through-opening cannot be accessed; a closure device, predisposed to block the lid in the closed position. The closure device comprises: a manoeuvring lever, associated to the lid; a bolt, operatively associated to the manoeuvring lever, by which manoeuvring lever the bolt is activated in motion between a closed position, in which the bolt prevents rotation of the lid from the closed position to the open position, and an open position, in which the bolt allows the rotation of the lid; a blocking and unblocking device, operatively connected to the bolt, predisposed to assume, on command, an enabled configuration, in which the blocking and unblocking device enables the bolt to be arranged in the open position, and a disenabled configuration, in which the blocking and unblocking device prevents the bolt from being arranged in the open position.

### SUMMARY OF INVENTION

Various aspects of the present invention are defined in the independent claims appended hereto. Some optional and/or preferred features are defined in the dependent claims.

According to a first aspect of the present invention there is provided a straddled vehicle. The straddled vehicle may comprise or include one or more of: a fuel tank, a head pipe, a seat, a storage box, a center cover, a power unit, a support, a hinge, a cap, an operating member, a slider, a solenoid, a sensor, a receiver, and/or a controller. The fuel tank may comprise or include a fuel filler port. The head pipe may be located in front of the fuel tank. The seat may be at least partially located behind the fuel tank. The storage box may be located below the seat and/or behind the fuel tank. The center cover may be arranged between the head pipe and the seat. The center cover may have a downwardly recessed shape between the fuel tank and the head pipe. The center cover may be located below the fuel tank. The support may be attached to the fuel tank and/or may be arranged around the fuel filler port. The hinge may be connected to the support. The cap may be movably attached to the support via a hinge in an open position and a closed position. The cap may open the fuel filler port at the open position and close the fuel filler port at the closed position. The operating member may be attached to the cap and/or may be operable by a rider or person. The slider may be attached to the cap. The slider may move from an engaged position to the support to a disengaged position by being pressed by the operating member. The solenoid may comprise or include a lock member. The lock member may be configured to move to a lock position and a release position. The lock member may lock a movement of the slider at the lock position. The lock member may unlock the slider at the release position. The sensor may detect a movement of the slider from the engaged position to the disengaged position. The receiver may receive a signal from a transmitter indicative of an identification code unique to the transmitter carried by the rider. The controller authenticates the identification code of the transmitter based on the signal received by the receiver. The controller authenticates the identification code of the transmitter when the identification code of the transmitter is appropriate. When the movement of the slider is detected and the identification code of the transmitter is authenticated, the controller may move the lock member to the release position. When the controller does not authenticate the transmitter identification code even when the movement of the slider is detected, the controller may hold the lock member at the lock position.

In the straddled vehicle according to the present aspect, the slider may move by being pressed by the operating member operated by the rider or person. Therefore, the solenoid can be miniaturized as compared with a case where the slider is moved by the solenoid. Further, the operating member and the slider may be attached to the cap. Therefore, a structure around the fuel tank may be downsized as compared with a case where the operating member and the slider are arranged around the cap. By reducing a size of the structure around the fuel tank, an area of the seat may expand. Alternatively, a capacity of the storage box may increase. Alternatively, a height of the center cover may be lowered to improve an ease of getting on and off. Alternatively, a thermal effect on the fuel tank may be reduced by increasing a distance between the power unit and the fuel tank.

Further, when the movement of the slider is detected, the lock member may move to the release position. The slider may move in conjunction with an operation of the operating member attached to the cap. Therefore, the rider or person can perform both unlocking of the cap and an operation of opening the cap after the unlocking by operating the operating member. As a result, the operability for opening the cap may be improved.

The entire slider may be located within an outer shape of the support when the cap is in the closed position as seen in an axial direction of the fuel filler port. In this case, the slider and the support may be arranged compactly. As a result, the structure around the fuel tank may be further miniaturized.

The support may have a circular opening facing the fuel filler port. When the cap is in the closed position and the slider is in the disengaged position, the entire slider may be located in the opening as seen in the axial direction of the fuel filler port. In this case, the slider and the support may be arranged compactly. As a result, the structure around the fuel tank may be miniaturized.

The straddled vehicle may further comprise or include an elastic member that may urge the slider toward the engaged position. The elastic member may be attached to the cap. In this case, the elastic member and the cap may be compactly arranged. As a result, the structure around the fuel tank may be further miniaturized.

The sensor may include a movable body and a switch. The movable body may move according to the movement of the slider. The switch may be located below the movable body and operated by the movable body. In this case, the sensor can be miniaturized by arranging the switch and the movable body compactly.

The movable body may overlap with the switch as seen in the axial direction of the fuel filler port. In this case, the movable body and the switch may be arranged compactly. As a result, the sensor may be further miniaturized.

The movable body may comprise or include a shaft portion and an arm portion. The shaft portion may extend in a moving direction of the slider. The arm portion may extend downward from the shaft portion and press the switch. In this case, the movable body and the switch may be arranged compactly. As a result, the sensor may be further miniaturized.

The entire switch may be located within the outer shape of the support as seen in the axial direction of the filler port. In this case, the switch and the support may be compactly arranged. As a result, the structure around the fuel tank may be further miniaturized.

The solenoid may comprise or include a main body. The lock member may protrude from the main body. The main body may be located within the outer shape of the support as seen in the axial direction of the fuel filler port. In this case, the solenoid and the support may be compactly arranged. As a result, the structure around the fuel tank may be further miniaturized.

The solenoid may overlap with the cap when the cap is in the closed position as seen in the axial direction of the fuel filler port. In this case, the solenoid and the cap may be compactly arranged. As a result, the structure around the fuel tank may be further miniaturized.

The slider may comprise or include a first slider, a second slider, and a clutch member. The first slider may be pressed by the operating member. The second slider may be provided separately from the first slider. The second slider may be engaged to the support at the engaged position. The second slider may be locked by the lock member at the lock position. The clutch member may be attached to the first slider. The clutch member may slide with respect to the second slider when the second slider is locked. The clutch member may lock the second slider to move the second slider together with the first slider when the second slider is unlocked. In this case, if the operating member is operated while the second slider is locked, the clutch member may slide so that the first slider moves relative to the second slider. As a result, damage to the first slider, the second slider, or the lock member may be prevented.

The sensor may detect a movement of the first slider. In this case, the sensor can detect the operation of the operating member by the rider by detecting the movement of the first slider.

When the slider moves toward the disengaged position, the second slider may start moving later than the first slider. In this case, when the slider moves in response to the operation of the operating member, the first slider may start moving in response to the pressing of the operating member before the second slider, and the second slider may start moving later than the first slider. Therefore, the operation of the operating member can be detected by the sensor before the second slider contact the lock member. As a result, the lock by the lock member can be released before the second slider contacts the lock member.

The straddled vehicle may further comprise or include a power switch and/or an alarm device. The power switch may switch a power of the straddled vehicle on and off. The alarm device may issue an alarm. The controller may determine whether the cap is located at the closed position or the open position based on a signal from the sensor. The controller may issue the alarm from the alarm device when the power switch is turned on while the cap is located at the open position. In this case, when the rider or person turns on the power switch without closing the cap, the alarm device may issue the alarm. As a result, it may be possible to prevent the rider or person from forgetting to close the cap.

### BRIEF DESCRIPTION OF DRAWINGS

One or more embodiments of the present invention will now be described, by way of example only, with reference to the accompanying drawings, which are:
- **FIG. 1**: a side view of a straddled vehicle according to an embodiment;
- **FIG. 2**: a top view of the straddled vehicle;
- **FIG. 3**: a perspective view of a fuel cap unit;
- **FIG. 4**: a perspective view of the fuel cap unit;
- **FIG. 5**: a cross-sectional view of a fuel tank and its surroundings;
- **FIG. 6**: a perspective view of the fuel cap unit;
- **FIG. 7**: a perspective view of the fuel cap unit;
- **FIG. 8**: a perspective view of the fuel cap unit;
- **FIG. 9**: an exploded view of the fuel cap unit;
- **FIG. 10**: an exploded view of a cap and an operating member;
- **FIG. 11**: a perspective view of the fuel cap unit in which an upper cover is omitted;
- **FIG. 12**: a perspective view of the fuel cap unit in which the upper cover and an inner cover are omitted;
- **FIG. 13**: a top view of the fuel cap unit in which the upper cover and the inner cover are omitted;
- **FIG. 14**: a top view of the fuel cap unit in which the upper cover and the inner cover are omitted;
- **FIG. 15**: a top view showing a part of the fuel cap unit;
- **FIG. 16**: a top view showing a part of the fuel cap unit;
- **FIG. 17**: an enlarged top view showing a part of the fuel cap unit;
- **FIG. 18**: a perspective view showing a part of the fuel cap unit;
- **FIG. 19**: a top view showing a part of the fuel cap unit;
- **FIG. 20**: a side view showing a part of the fuel cap unit;
- **FIG. 21**: a side view showing a part of the fuel cap unit;
- **FIG. 22**: a block diagram showing a control system for the straddled vehicle;
- **FIG. 23**: an enlarged top view showing a part of the fuel cap unit; and
- **FIG. 24**: an enlarged top view showing a part of the fuel cap unit.

### DETAILED DESCRIPTION OF DRAWINGS

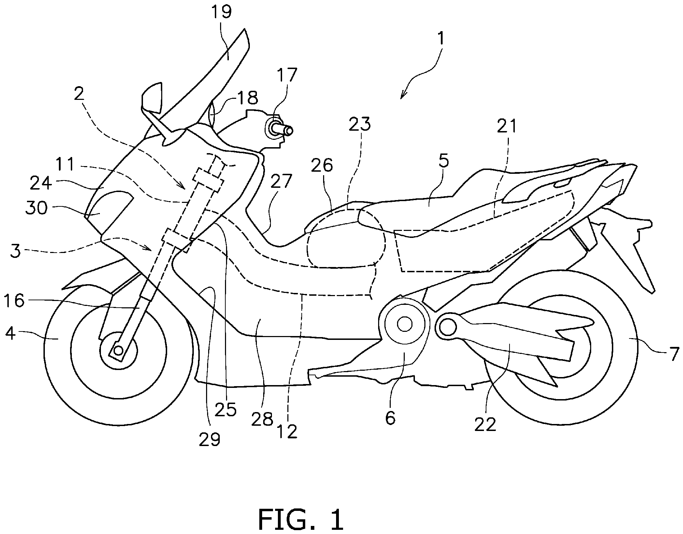

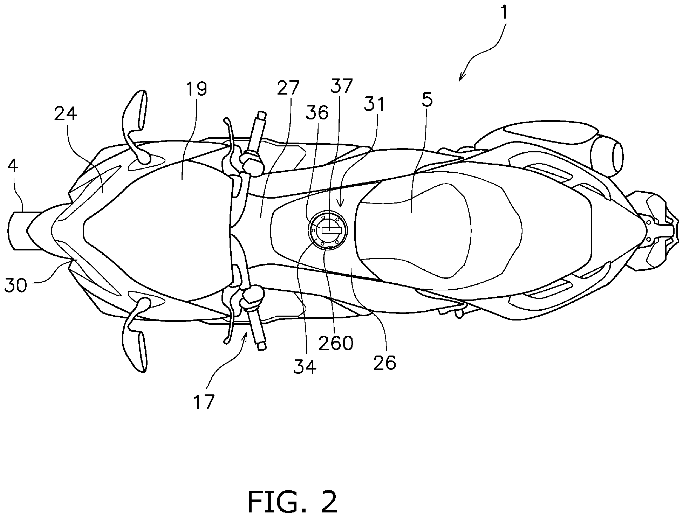

Hereinafter, a straddled vehicle according to an embodiment of the present invention will be described with reference to the drawings. FIG. 1 is a side view of the straddled vehicle 1 according to the embodiment. FIG. 2 is a top view of the straddled vehicle 1. The straddled vehicle 1 according to the present embodiment is a scooter. As illustrated in FIG. 1, the straddled vehicle 1 includes a vehicle body frame 2, a steering device 3, a front wheel 4, a seat 5, a power unit 6, and a rear wheel 7. In the following description, the front-rear, left-right directions are defined as the directions when viewed from a rider seated on the seat 5.

The vehicle body frame 2 includes a head pipe 11 and a main frame 12. The head pipe 11 is arranged at a center in the left-right direction of the vehicle. The head pipe 11 extends forward and downward. The main frame 12 extends rearward from the head pipe 11.

The steering device 3 is turnably supported by the head pipe 11. The steering device 3 rotatably supports the front wheel 4. The steering device 3 includes a front fork 16 and a handle member 17. The front fork 16 is turnably supported by the head pipe 11. The front wheel 4 is rotatably supported by the front fork 16.

The handle member 17 is operable by a rider to rotate the front wheel 4. The handle member 17 is connected to the front fork 16. The handle member 17 extends in the left-right direction. A meter panel 18 is arranged in front of the handle member 17. The meter panel 18 includes, for example, a speedometer. A windshield 19 is arranged in front of the meter panel 18.

The seat 5 is arranged behind the head pipe 11. The seat 5 is arranged above the main frame 12. A storage box 21 is arranged below the seat 5. The power unit 6 is arranged below the seat 5. The power unit 6 is arranged below the storage box 21. The power unit 6 includes an internal combustion engine. The power unit 6 is supported by the main frame 12. The rear wheel 7 is rotatably supported by the swing arm 22. The swing arm 22 is swingably supported by the main frame 12 or the power unit 6.

The straddled vehicle 1 includes a fuel tank 23. The fuel tank 23 is arranged between the head pipe 11 and the seat 5. The fuel tank 23 is arranged above the main frame 12. The fuel tank 23 is supported by the main frame 12. The head pipe 11 is arranged in front of the fuel tank 23. At least a part of the seat 5 is located behind the fuel tank 23. A part of the seat 5 may overlap with the fuel tank 23 as seen in a vehicle top view. The storage box 21 is arranged behind the fuel tank 23. The power unit 6 is arranged below the fuel tank 23.

The straddled vehicle 1 includes a front cover 24, a leg shield 25, a tank cover 26, a center cover 27, and a side cover 28. The front cover 24 is arranged in front of and on the left and right sides of the head pipe 11. A headlight 30 is arranged on the front cover 24. The leg shield 25 is arranged behind the front cover 24. A footrest 29 is arranged behind the leg shield 25. The footrest 29 has a flat shape and extends rearward from a lower portion of the leg shield 25.

The tank cover 26 covers the fuel tank 23 from above. The tank cover 26 overlaps with the fuel tank 23 as seen in the vehicle top view. The tank cover 26 is arranged in front of the seat 5. The tank cover 26 is arranged between the center cover 27 and the seat 5. The center cover 27 is arranged above the main frame 12. The center cover 27 is arranged between the head pipe 11 and the seat 5. The center cover 27 is arranged between the head pipe 11 and the tank cover 26. The center cover 27 has a shape recessed downward between the fuel tank 23 and the head pipe 11.

The side cover 28 is arranged below the seat 5. The side cover 28 covers at least a part of the power unit from the lateral side. The footrest 29 is connected to a lower end of the side cover 28. The footrest 29 projects laterally from the side cover 28.

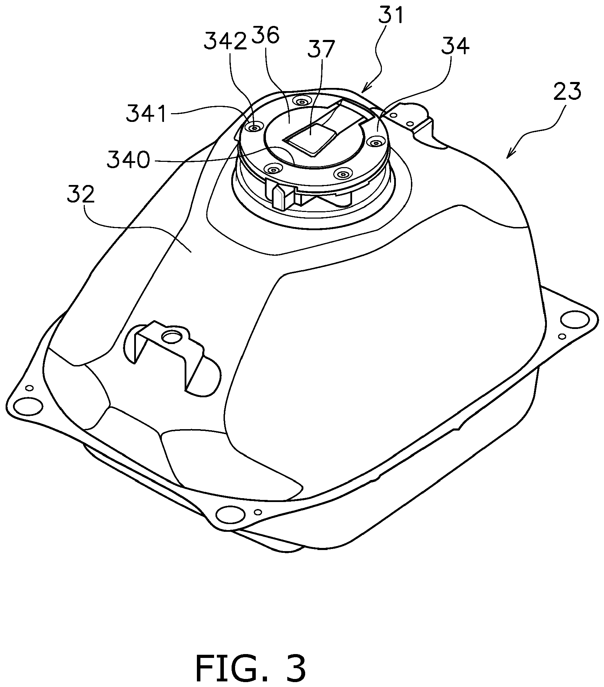

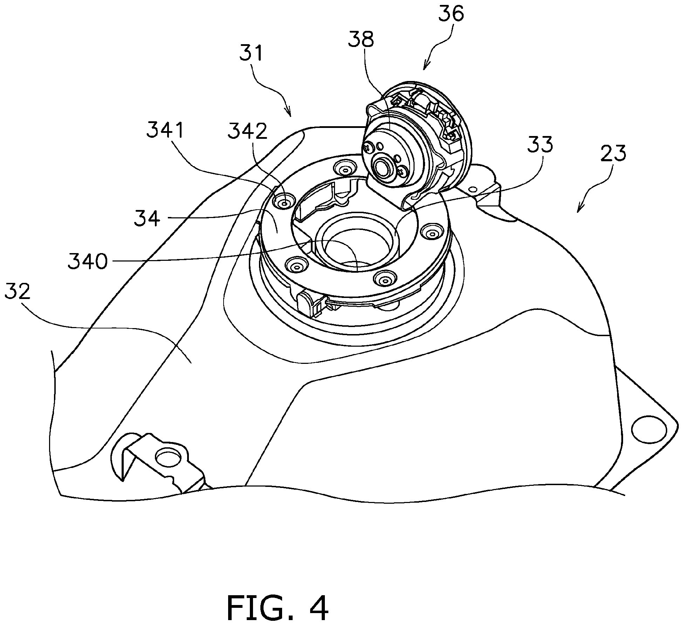

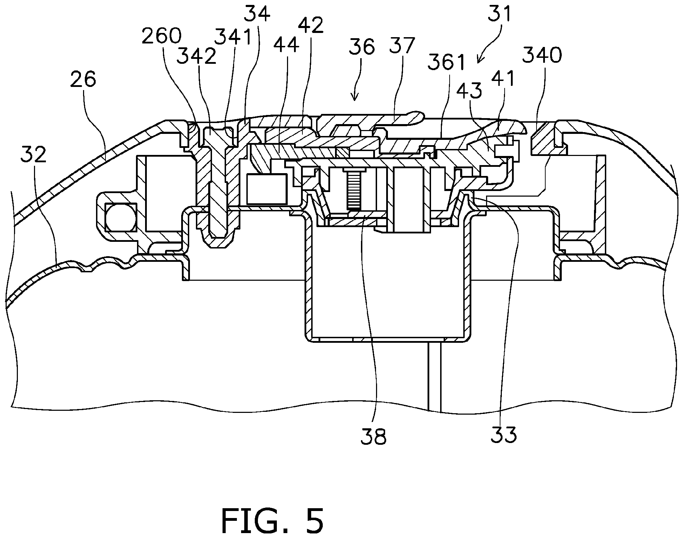

The straddled vehicle 1 includes a fuel cap unit 31. FIGS. 3 and 4 are perspective views of the fuel cap unit 31. FIG. 5 is a cross-sectional view of the fuel tank 23 and its surroundings. As illustrated in FIGS. 4 and 5, the fuel tank 23 includes a tank body 32 and a fuel filler port 33. The tank body 32 has a space for storing fuel inside. The fuel filler port 33 is arranged on an upper surface of the tank body 32. The fuel filler port 33 is open upward. The fuel cap unit 31 is arranged above the fuel filler port 33. The fuel cap unit 31 opens and closes the fuel filler port 33.

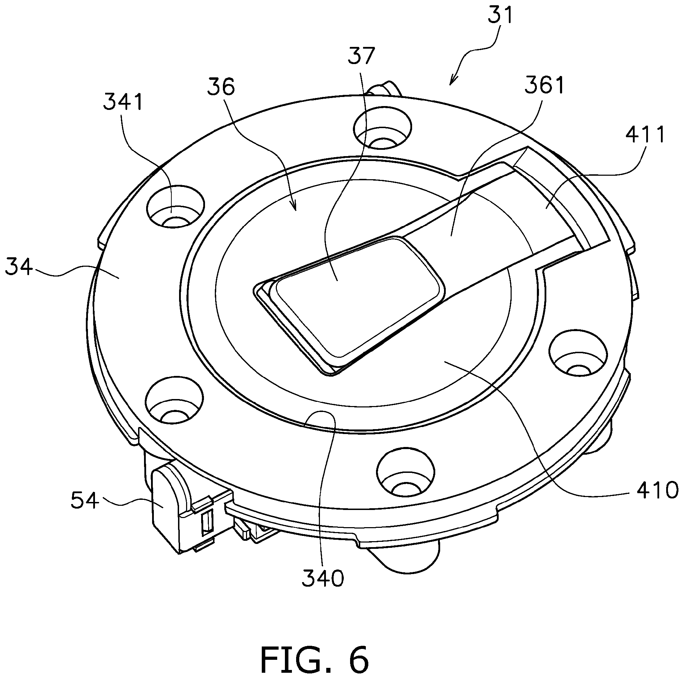

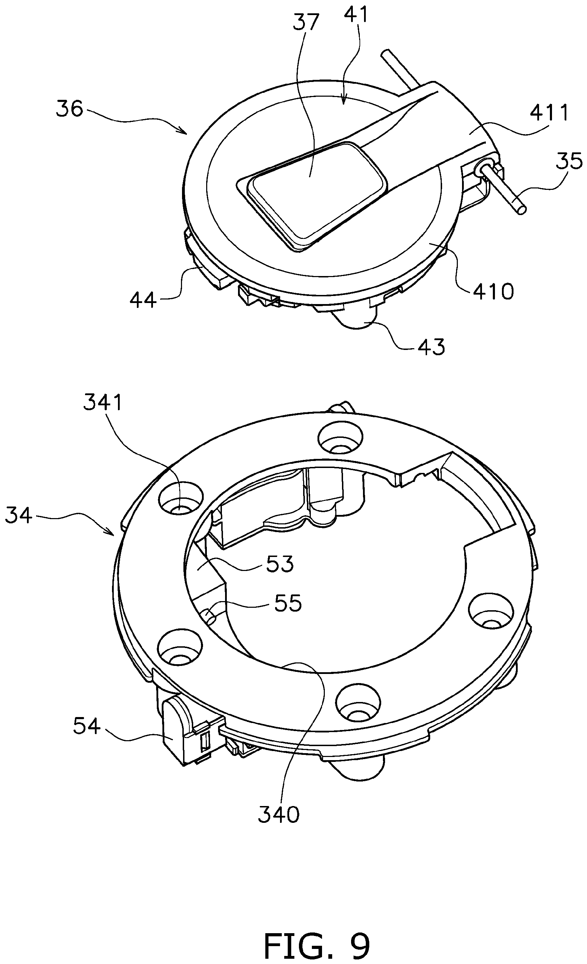

FIGS. 6 to 8 are perspective views of the fuel cap unit 31. FIG. 9 is an exploded view of the fuel cap unit 31. As illustrated in FIGS. 6 to 8, the fuel cap unit 31 includes a support 34, a hinge 35, a cap 36, an operating member 37, and a packing 38. The support 34 is attached to the fuel tank 23. The support 34 has an annular shape. The support 34 has a circular outer shape. The support 34 is arranged above the fuel tank 23. The support 34 has a circular opening 340 facing the fuel filler port 33. The support 34 is arranged around the fuel filler port 33.

The support 34 includes a plurality of holes 341. The plurality of holes 341 are arranged at intervals from each other in a circumferential direction of the support 34. In the drawings, only one of the plurality of holes 341 is designated by a reference numeral, and the other reference numerals are omitted. As illustrated in FIGS. 3 and 4, the support 34 is fixed to the fuel tank 23 by a fixing member 342 such as a bolt passed through the hole 341. As illustrated in FIG. 2, the tank cover 26 includes an opening 260. The support 34, the cap 36, and the operating member 37 are arranged in the opening 260 of the tank cover 26 and are exposed to the outside of the tank cover 26.

The hinge 35 is connected to the support 34 and the cap 36. The hinge 35 has a pin-like shape and extends in a vehicle width direction. The hinge 35 is arranged in front of the operating member 37. The hinge 35 rotatably supports the cap 36. The cap 36 is movably attached to the support 34 via the hinge 35 to an open position and a closed position. As illustrated in FIG. 3, the cap 36 closes the fuel filler port 33 at the closed position. As illustrated in FIG. 4, the cap 36 opens the fuel filler port 33 at the open position.

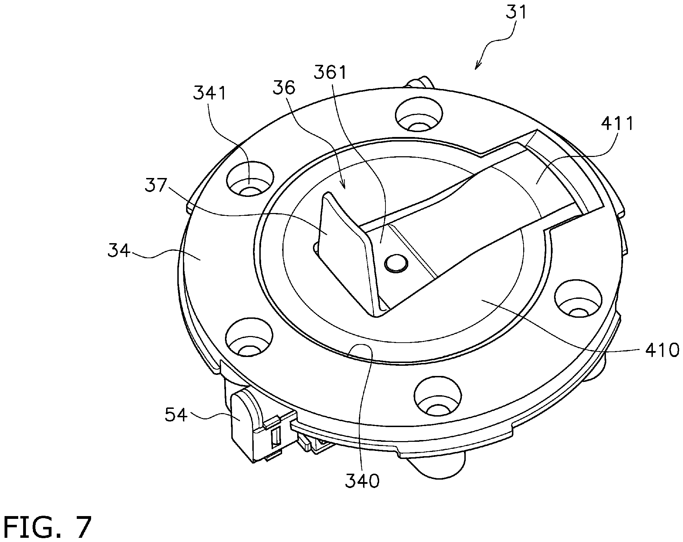

The operating member 37 is attached to the cap 36. The operating member 37 is operable by a rider or person. The operating member 37 is rotatably supported by the cap 36. A recess 361 is provided on an upper surface of the cap 36. The operating member 37 is arranged in the recess 361. The operating member 37 is movable to a storage position illustrated in FIG. 6 and a deployment position illustrated in FIG. 7. The packing 38 is attached to a bottom surface of the cap 36. The packing 38 is made of elastic material such as rubber.

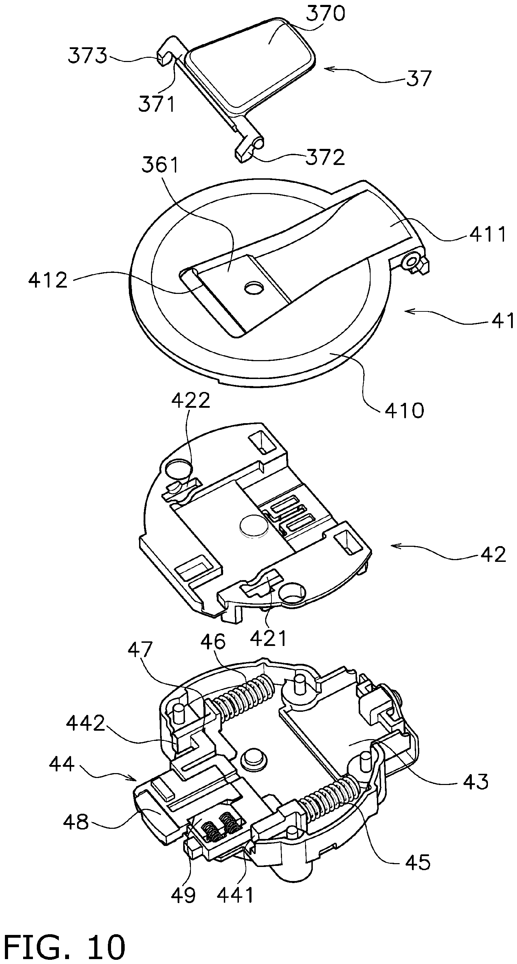

FIG. 10 is an exploded view of the cap 36 and the operating member 37. As illustrated in FIG. 10, the operating member 37 includes an operating portion 370, a rotation shaft 371, a first pressing portion 372, and a second pressing portion 373. The operating portion 370 has a tab-like shape. The operating portion 370 extends rearward from the rotation shaft 371. The operating portion 370 is operable by a rider. The operating portion 370 is arranged in the recess 361. The rotation shaft 371 projects laterally from the operating portion 370. The operating member 37 is rotatably supported by the cap 36 around the rotation shaft 371. The first pressing portion 372 projects downward from one end of the rotation shaft 371. The second pressing portion 373 projects downward from the other end of the rotation shaft 371. The first pressing portion 372 and the second pressing portion 373 rotate together with the rotation shaft 371.

The cap 36 includes an upper cover 41, an inner cover 42, and a cap base 43. The upper cover 41 and the inner cover 42 are attached to the cap base 43. The upper cover 41 includes the recess 361 described above. The upper cover 41 includes a cover body 410 and a connection portion 411. The cover body 410 has a circular shape that matches the opening 340 of the support 34. The cover body 410 includes a slit 412. The rotation shaft 371 of the operating member 37, the first pressing portion 372, and the second pressing portion 373 are arranged in the cap 36 through the slit 412. The connection portion 411 protrudes from the cover body 410. The connection portion 411 extends rearward from the cover body 410. The hinge 35 is connected to the connection portion 411.

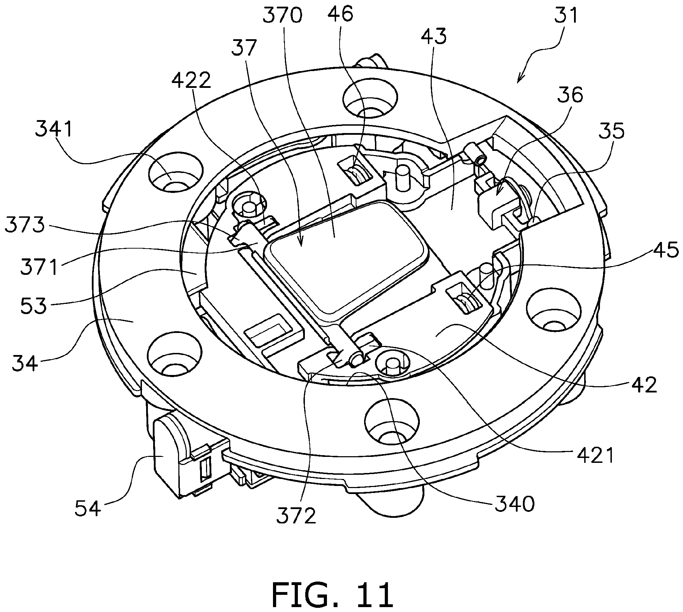

The inner cover 42 is arranged between the upper cover 41 and the cap base 43. The rotation shaft 371 of the operating member 37 is supported by the cap 36 by being sandwiched between the inner cover 42 and the upper cover 41. The inner cover 42 includes a first hole 421 and a second hole 422. FIG. 11 is a perspective view of the fuel cap unit 31 in which the upper cover 41 is omitted. As illustrated in FIG. 11, the first pressing portion 372 extends into the cap base 43 through the first hole 421. The second pressing portion 373 extends into the cap base 43 through the second hole 422.

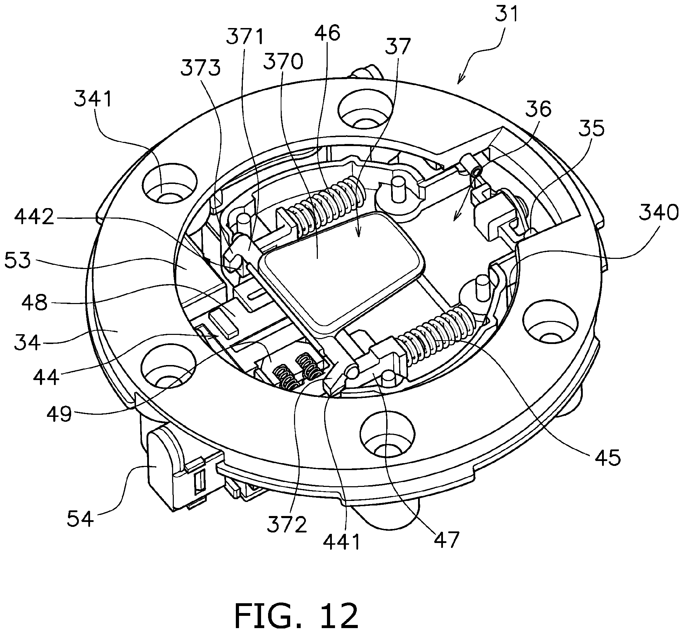

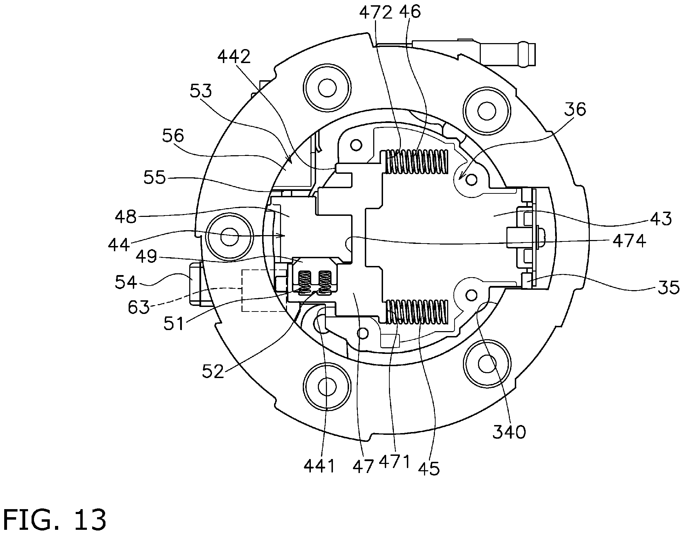

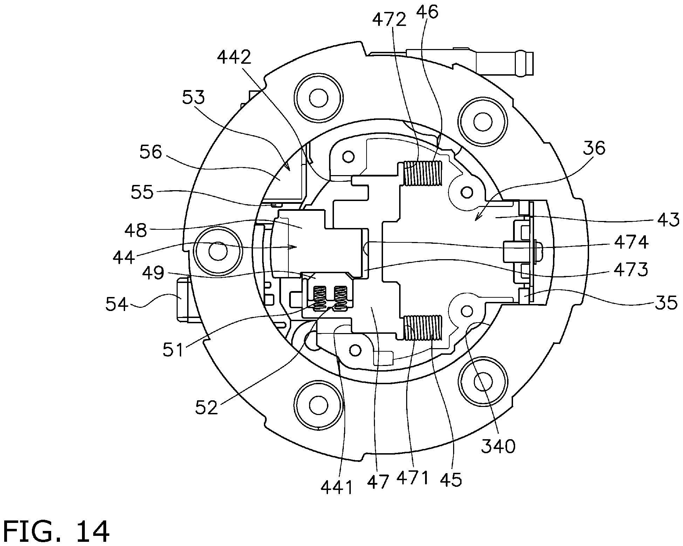

FIG. 12 is a perspective view of the fuel cap unit 31 in which the upper cover 41 and the inner cover 42 are omitted. FIG. 13 is a top view of the fuel cap unit 31 in which the upper cover 41 and the inner cover 42 are omitted. As illustrated in FIGS. 12 and 13, the fuel cap unit 31 includes a slider 44 and elastic members 45 and 46. The slider 44 is attached to the cap base 43. The slider 44 is slidable with respect to the cap base 43. The slider 44 is movable to an engaged position illustrated in FIG. 13 and a disengaged position illustrated in FIG. 14. Hereinafter, a moving direction of the slider 44 is referred to as a sliding direction.

As seen from an axial direction of the fuel filler port 33, the slider 44 overlaps with the support 34 at the engaged position. The slider 44 engages to the support 34 at the engaged position. As seen from the axial direction of the fuel filler port 33, the slider 44 does not overlap with the support 34 at the disengaged position. The slider 44 does not engage to the support 34 at the disengaged position. In the following description, a top view means to be viewed from the axial direction of the fuel filler port 33.

The elastic members 45 and 46 are attached to the cap base 43. The elastic members 45 and 46 are supported by the cap base 43 and the inner cover 42. The elastic members 45 and 46 urge the slider 44 toward the engaged position. The elastic members 45 and 46 include a first elastic member 45 and a second elastic member 46. The first elastic member 45 and the second elastic member 46 are arranged apart from each other in the left-right direction. The first elastic member 45 and the second elastic member 46 are, for example, springs. The first elastic member 45 and the second elastic member 46 urge the slider 44 toward the engaged position.

When the operating member 37 is in the storage position, the slider 44 is held at the engaged position by the urging force of the elastic members 45 and 46. The slider 44 moves from the engaged position to the disengaged position by being pressed by the operating member 37. The slider 44 includes a first receiving portion 441 and a second receiving portion 442. The first receiving portion 441 and the second receiving portion 442 are arranged apart from each other in the left-right direction. As illustrated in FIG. 12, the first receiving portion 441 faces the first pressing portion 372. The second receiving portion 442 faces the second pressing portion 373. As the first pressing portion 372 rotates around the rotation shaft 371, the first pressing portion 372 presses the first receiving portion 441. As the second pressing portion 373 rotates around the rotation shaft 371, the second pressing portion 373 presses the first receiving portion 441. Therefore, the first receiving portion 441 is pressed by the first pressing portion 372 as the operating member 37 moves from the storage position to the deployment position. The second receiving portion 442 is pressed by the second pressing portion 373 as the operating member 37 moves from the storage position to the deployment position. As a result, the slider 44 moves from the engaged position to the disengaged position.

When the cap 36 is in the closed position and the slider 44 is in the engaged position, as illustrated in FIG. 13, the entire slider 44 is located within an outer shape of the support 34 as seen in the top view of the fuel cap unit 31. When the cap 36 is in the closed position and the slider 44 is in the disengaged position, as illustrated in FIG. 14, the entire slider 44 is located in the opening 340 of the support 34 as seen in the top view.

The slider 44 includes a first slider 47, a second slider 48, a clutch member 49, and elastic members 51 and 52. The first slider 47 is pressed by the operating member 37. The first slider 47 includes the first receiving portion 441 and the second receiving portion 442 described above. The first slider 47 is pressed by the operating member 37 at the first receiving portion 441 and the second receiving portion 442. The first slider 47 includes a third receiving portion 471 and a fourth receiving portion 472. The third receiving portion 471 is in contact with the first elastic member 45. The fourth receiving portion 472 is in contact with the second elastic member 46. The first slider 47 is pressed by the elastic members 45 and 46 at the third receiving portion 471 and the fourth receiving portion 472.

The second slider 48 is provided separately from the first slider 47. The second slider 48 is slidable with respect to the first slider 47. The second slider 48 engages to the support 34 when the slider 44 is located at the engaged position. The second slider 48 does not engage to the support 34 when the slider 44 is located at the disengaged position. As illustrated in FIG. 14, the first slider 47 includes a recess 473. A part of the second slider 48 is arranged in the recess 473 of the first slider 47. The first slider 47 includes a contact surface 474. As illustrated in FIG. 13, when the slider 44 is at the engaged position, the second slider 48 is in contact with the contact surface 474 of the first slider 47. When the slider 44 is at the engaged position, the second slider 48 is pressed by the contact surface 474 of the first slider 47.

The clutch member 49 connects the first slider 47 and the second slider 48. The clutch member 49 is fixed to the first slider 47 in the sliding direction. That is, the clutch member 49 is immovable in the sliding direction with respect to the first slider 47. The clutch member 49 is movable with respect to the first slider 47 in a direction intersecting the sliding direction. The elastic members 51 and 52 are, for example, springs. The clutch member 49 is pressed by the elastic members 51 and 52 toward the second slider 48 in the direction intersecting the sliding direction.

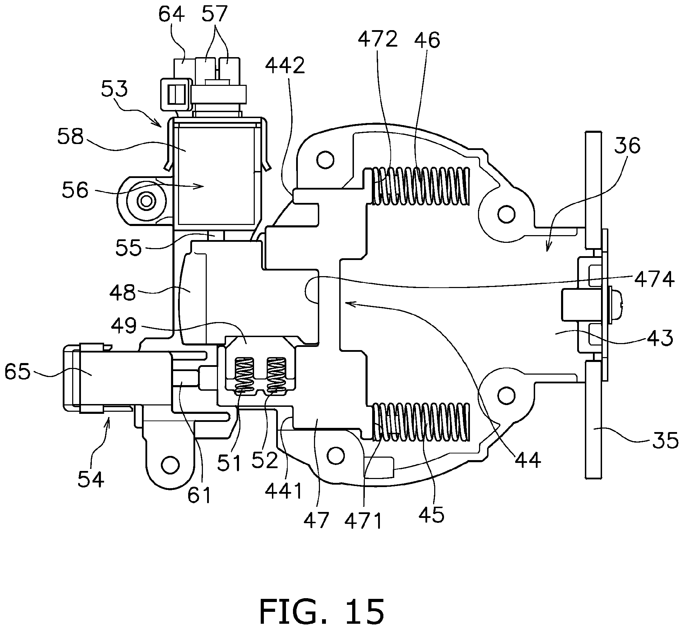

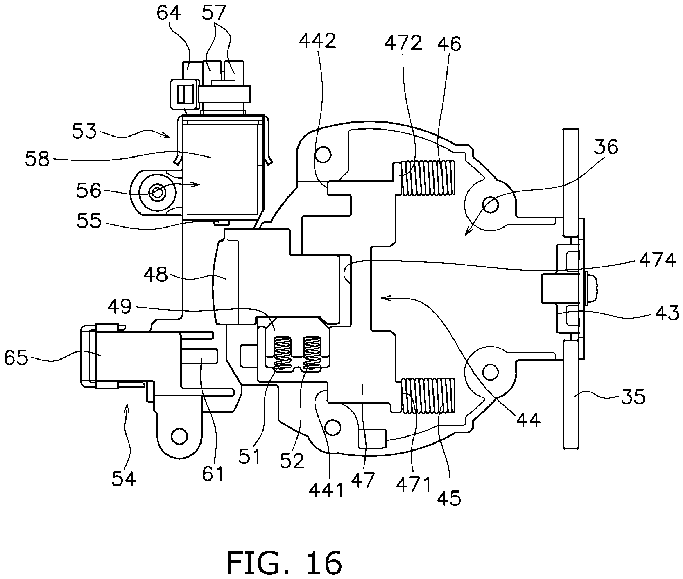

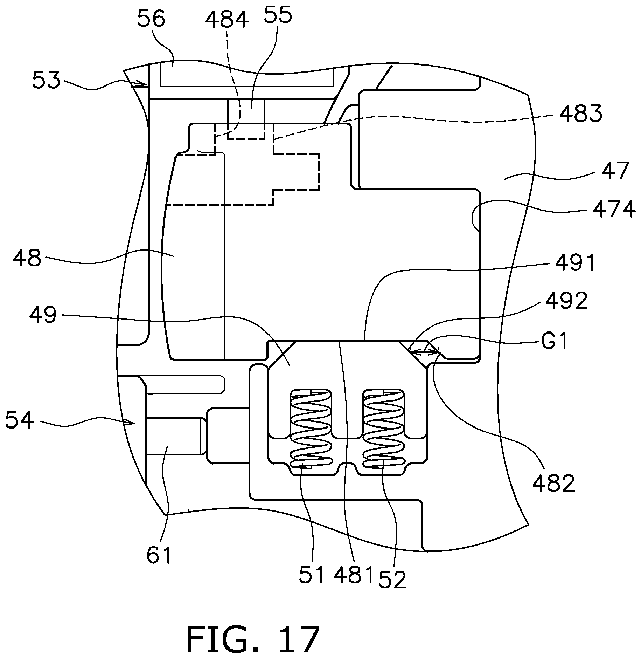

FIGS. 15 and 16 are top views showing a part of the fuel cap unit 31. FIG. 17 is an enlarged view of FIG. 15. In FIGS. 15 and 17, the slider 44 is located at the engaged position. In FIG. 16, the slider 44 is located at the disengaged position. As illustrated in FIG. 17, the clutch member 49 includes a first slide surface 491 and a first tapered surface 492. The first slide surface 491 extends in the sliding direction. The first slide surface 491 is in contact with the second slider 48. The first tapered surface 492 is arranged in a direction toward the disengaged position with respect to the first slide surface 491.

A side surface of the second slider 48 includes a second slide surface 481 and a second tapered surface 482. The second slide surface 481 extends in the sliding direction. The second slide surface 481 is in contact with the first slide surface 491. The second tapered surface 482 is arranged in a direction toward the disengaged position with respect to the second slide surface 481. The second tapered surface 482 faces the first tapered surface 492 in the sliding direction.

When the slider 44 is located at the engaged position, the first tapered surface 492 is arranged at a gap G1 from the second tapered surface 482. As the first slider 47 moves from the engaged position to the disengaged position, the first tapered surface 492 approaches the second tapered surface 482. When the first tapered surface 492 contacts the second tapered surface 482 and presses the second tapered surface 482, the first slider 47 and the second slider 48 move integrally.

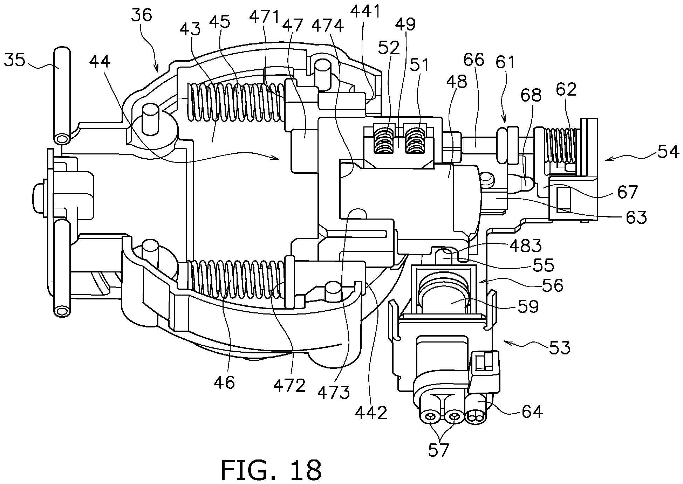

FIG. 18 is a perspective view showing a part of the fuel cap unit 31. As illustrated in FIGS. 15 to 18, the fuel cap unit 31 includes a solenoid 53 and a sensor 54. The solenoid 53 is arranged on the lateral side of the second slider 48. The solenoid 53 is fixed to the support 34. The solenoid 53 includes a lock member 55, a solenoid body 56, and an electric wire 57. The electric wire 57 is connected to the solenoid body 56. The lock member 55 projects from the solenoid body 56. The lock member 55 is movable to a lock position and a release position.

In FIGS. 15 and 17, the lock member 55 is located at the lock position. In FIG. 16, the lock member 55 is located at the release position. The lock member 55 moves from the release position to the lock position by moving from the solenoid body 56 toward the second slider 48. The solenoid body 56 includes a solenoid case 58 and a coil 59. In FIG. 18, the solenoid case 58 is omitted. The coil 59 is arranged in the solenoid case 58. The solenoid 53 moves the lock member 55 by the magnetic force generated by energizing the coil 59.

As illustrated in FIGS. 17 and 18, the second slider 48 includes a notch 483. The notch 483 is provided on the lateral side surface of the second slider 48 facing the solenoid 53. The notch 483 extends in the sliding direction. As illustrated in FIG. 17, as seen in the top view, the lock member 55 overlaps with the second slider 48 at the lock position. The lock member 55 is located in the notch 483 at the lock position. The lock member 55 locks the movement of the slider 44 toward the disengaged position by engaging the second slider 48 at the lock position. The lock member 55 moves from the lock position to the release position by retracting from the second slider 48 toward the solenoid body. As illustrated in FIG. 16, as seen in the top view, the lock member 55 does not overlap the second slider 48 at the release position. The lock member 55 is located outside the notch 483 at the release position. At the release position, the lock member 55 unlocks the slider 44 by not engaging the second slider 48.

As illustrated in FIG. 13, the entire solenoid body 56 is located within the outer shape of the support 34 as seen in the top view. As seen in the top view, the solenoid body 56 overlaps with the support 34. As seen in the top view, a part of the solenoid body 56 is located in the opening 340 of the support 34. Therefore, as seen in the top view, the solenoid 53 overlaps with the cap 36 when the cap 36 is in the closed position.

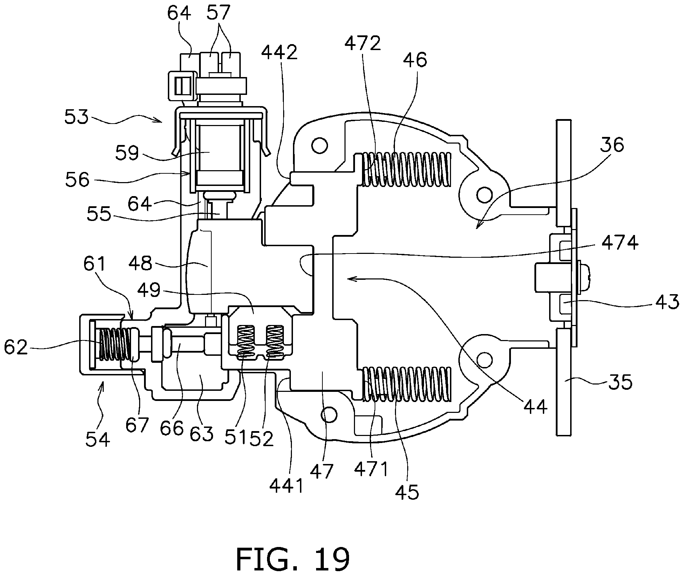

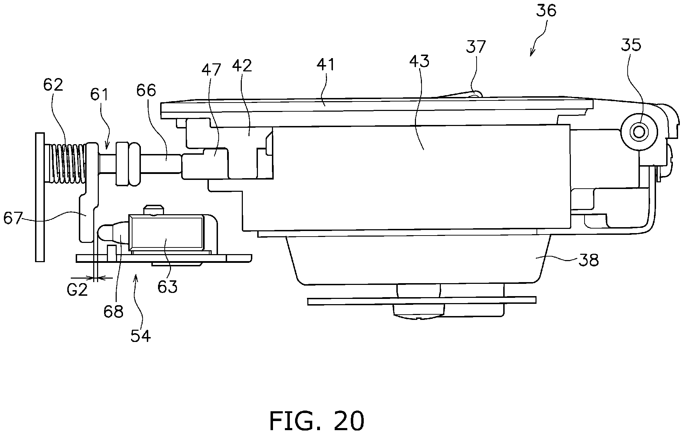

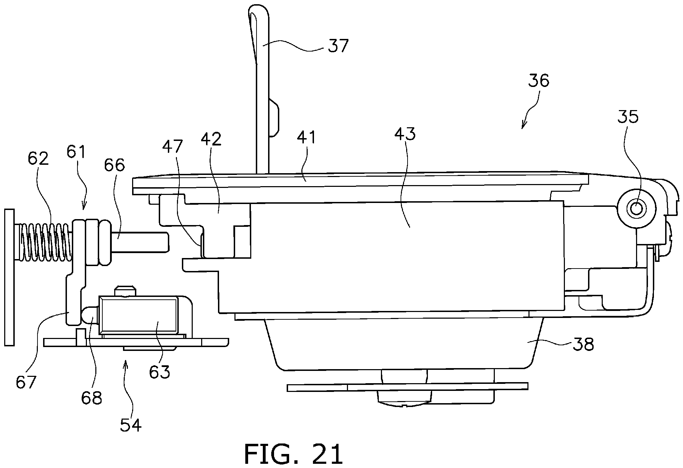

The sensor 54 detects the movement of the slider 44 from the engaged position to the disengaged position. The sensor 54 is fixed to the support 34. FIG. 19 is a top view showing a part of the fuel cap unit 31. FIGS. 20 and 21 are side views showing a part of the fuel cap unit 31. As illustrated in FIGS. 19 to 21, the sensor 54 includes a movable body 61, an urging member 62, a switch 63, an electric cable 64, and a sensor case 65 illustrated in FIG.15. Note that the sensor case 65 is omitted in FIGS. 19 to 21. The movable body 61, the urging member 62, and the switch 63 are arranged in the sensor case 65. The sensor case 65 is integrated with the solenoid case 58.

The movable body 61 faces the slider 44 in the sliding direction. The urging member 62 urges the movable body 61 toward the slider 44. The urging member 62 is, for example, a spring. The movable body 61 is movable in the sliding direction. The movable body 61 moves according to the movement of the first slider 47. As illustrated in FIGS. 15 and 20, when the slider 44 is located at the engaged position, the movable body 61 is in contact with the first slider 47. As illustrated in FIGS. 16 and 21, when the slider 44 is located at the engaged position, the movable body 61 is separated from the first slider 47.

As illustrated in FIGS. 20 and 21, the movable body 61 includes a shaft portion 66 and an arm portion 67. The shaft portion 66 extends in the sliding direction. A tip of the shaft portion 66 faces the first slider 47. The arm portion 67 extends downward from the shaft portion 66. The arm portion 67 faces the switch 63 in the sliding direction.

The electric cable 64 is connected to the switch 63. The switch 63 is operated by the movable body 61. The switch 63 is arranged below the movable body 61. As illustrated in FIG. 19, the movable body 61 overlaps with the switch 63 as seen in the top view. Specifically, the switch 63 is located below the shaft portion 66. As seen in the top view, the switch 63 overlaps with the shaft portion 66. The switch 63 is located below the first slider 47 at the engaged position. As seen in the top view, the switch 63 overlaps with the first slider 47 at the engaged position.

As illustrated in FIG. 13, the sensor 54 overlaps with the support 34 as seen in the top view. As seen in the top view, a part of the sensor 54 is located within the opening 340 of the support 34. Therefore, as seen in the top view, a part of the sensor 54 overlaps with the cap 36. As seen in the top view, the entire switch 63 is located within the outer shape of the support 34. As seen in the top view, a part of the switch 63 is located within the opening 340 of the support 34. The switch 63 includes a contact piece 68. The contact piece 68 faces the arm portion 67.

As illustrated in FIG. 20, when the slider 44 is in the engaged position, the movable body 61 is pressed by the first slider 47. Therefore, the arm portion 67 of the movable body 61 is separated from the contact piece 68 of the switch 63. A gap G2, illustrated in FIG. 20, between the arm portion 67 and the switch 63 when the slider 44 is located at the engaged position is smaller than the gap G1, illustrated in FIG. 17, between the first tapered surface 492 and the second tapered surface 482 in the sliding direction.

As illustrated in FIG. 21, when the slider 44 is located at the disengaged position, the movable body 61 is separated from the first slider 47. Therefore, as illustrated in FIG. 21, the arm portion 67 of the movable body 61 presses the contact piece 68 of the switch 63 by the urging force of the urging member 62. The sensor 54 detects the position of the slider 44 depending on whether or not the contact piece 68 of the switch 63 is pressed.

As illustrated in FIG. 17, the second slider 48 includes a receiving portion 484. The receiving portion 484 faces the lock member 55 located at the lock position in the sliding direction. When the second slider 48 moves toward the disengaged position, the receiving portion 484 approaches the lock member 55. Then, when the receiving portion 484 contacts the lock member 55, the movement of the second slider 48 toward the disengaged position is restricted.

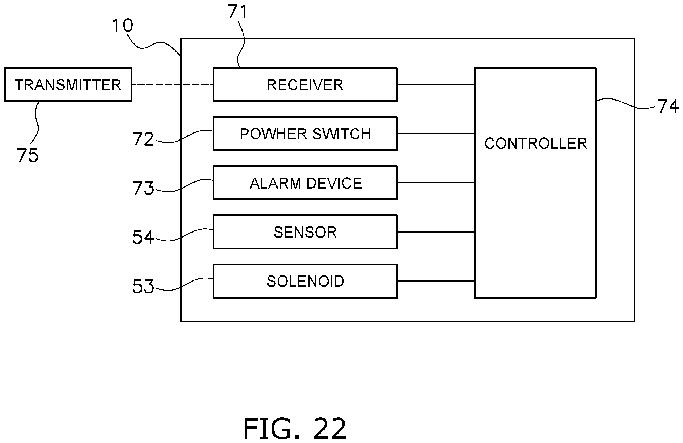

FIG. 22 is a block diagram showing a control system 10 of the straddled vehicle 1. The control system 10 is mounted on the straddled vehicle 1. As illustrated in FIG. 22, the straddled vehicle 1 includes a receiver 71, a power switch 72, an alarm device 73, and a controller 74. The receiver 71, the power switch 72, the alarm device 73, and the controller 74 may be arranged at any location of the straddled vehicle 1, and the locations are not particularly limited. The receiver 71 wirelessly communicates with a transmitter 75 carried by a rider. The receiver 71 receives a signal indicative of an identification code unique to the transmitter 75 from the transmitter 75.

The power switch 72 switches the power of the straddled vehicle 1 on and off. The power switch 72 is operated by a rider or person. For example, the meter panel 18 may be activated by turning on the power switch 72. The alarm device 73 issues an alarm. The alarm device 73 may be, for example, a buzzer and may emit a warning sound. Alternatively, the alarm device 73 is a lamp, and the warning light may be turned on. Alternatively, the alarm device 73 may be a liquid crystal panel and display a warning image.

The controller 74 includes, for example, a microcomputer and electrically controls the straddled vehicle 1. The controller 74 may be composed of a plurality of controllers. Alternatively, the controller 74 may be composed of a single controller. The controller 74 authenticates the identification code of the transmitter 75 based on the signal received by the receiver 71. When the identification code of the transmitter 75 is appropriate, the controller 74 authenticates the identification code of the transmitter 75. The controller 74 detects the movement of the slider 44 by the signal from the sensor 54. The controller 74 controls the solenoid 53 to switch between locking and unlocking the slider 44.

As illustrated in FIG. 6, when the cap 36 is at the closed position and the operating member 37 is at the storage position, the operating member 37 is not pressing the slider 44. As a result, the slider 44 is located at the engaged position, as illustrated in FIG. 13. As illustrated in FIG. 20, when the slider 44 is at the engaged position, the movable body 61 of the sensor 54 is away from the switch 63. The controller 74 holds the lock member 55 at the lock position when the movable body 61 is away from the switch 63.

As illustrated in FIG. 7, when the cap 36 is at the closed position and a rider moves the operating member 37 from the storage position to the deployment position, the slider 44 is pressed by the operating member 37. As a result, the slider 44 moves from the engaged position to the disengaged position. At this time, the movable body 61 contacts the switch 63 before the receiving portion 484 contacts the lock member 55. When the controller 74 detects that the movable body 61 contacts the switch 63 from the signal of the sensor 54 and authenticates the identification code of the transmitter 75, the controller 74 moves the lock member 55 from the lock position to the release position.

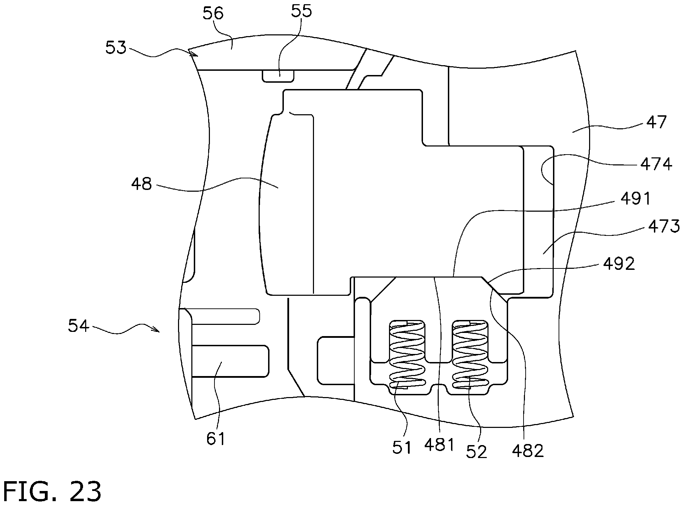

Specifically, when a rider or person moves the operating member 37 toward the deployment position, the first slider 47 is pressed by the operating member 37 and starts moving toward the disengaged position. The clutch member 49 moves together with the first slider 47, and the first slide surface 491 of the clutch member 49 slides along the second slide surface 481 of the second slider 48. Then, as illustrated in FIG. 23, the first tapered surface 492 of the clutch member 49 is engaged to the second tapered surface 482 of the second slider 48. As a result, the first slider 47 and the second slider 48 are connected to each other via the clutch member 49, and the second slider 48 moves together with the first slider 47 toward the disengaged position.

As described above, when the slider 44 is located at the engaged position, the gap G2 between the arm portion 67 and the switch 63 is smaller in the sliding direction than the gap G1 between the first tapered surface 492 and the second tapered surface 482. Therefore, the arm portion 67 contacts the switch 63 before the first tapered surface 492 is locked to the second tapered surface 482. Therefore, before the second slider 48 moves toward the disengaged position together with the first slider 47, the controller 74 controls the solenoid 53 to move the lock member 55 from the lock position to the release position.

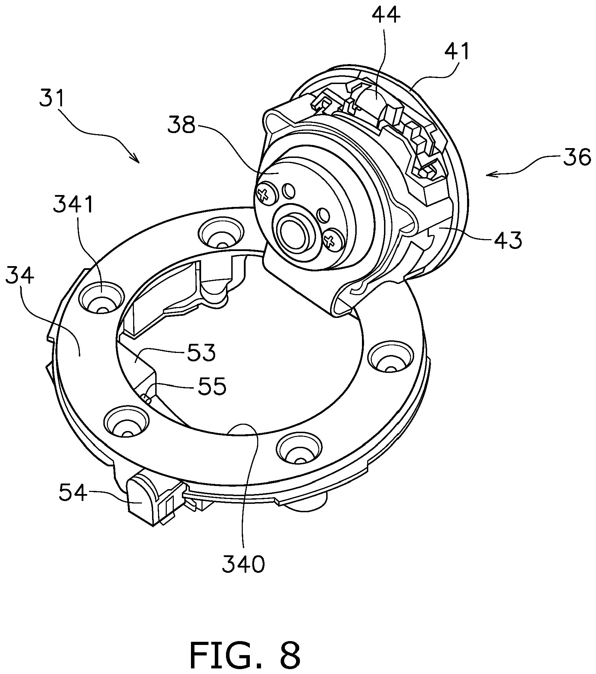

After that, as illustrated in FIG. 7, when a rider or person moves the operating member 37 to the deployment position, the slider 44 moves to the disengaged position as illustrated in FIG. 14. As a result, a rider can move the cap 36 from the closed position to the open position, as illustrated in FIG. 8.

When the controller 74 detects that the movable body 61 contacts the switch 63 from the signal of the sensor 54 but does not authenticate the identification code of the transmitter 75, the controller 74 holds the lock member 55 at the lock position. Therefore, the lock member 55 is held at the lock position even if another person who does not have the proper transmitter 75 moves the operating member 37 toward the deployment position. Therefore, the slider 44 cannot be moved to the disengaged position, and the cap 36 cannot be moved from the closed position to the open position.

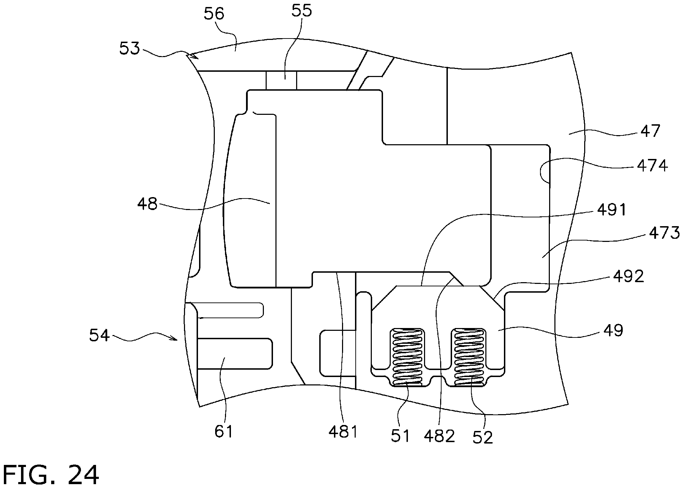

However, even if the lock member 55 is still held at the lock position, the operating member 37 is movable to the deployment position. In that case, the clutch member 49 moves toward the disengaged position together with the first slider 47, but the second slider 48 is held at the engaged position by being engaged by the lock member 55. Therefore, the clutch member 49 is pressed by the second tapered surface 482 of the second slider 48 in the direction away from the second slider 48. As a result, as illustrated in FIG. 24, the clutch member 49 goes over the second tapered surface 482 and further moves without being engaged to the second tapered surface 482. In this way, even if the operating member 37 is moved to the deployment position, the first slider 47 and the clutch member 49 move according to the operation of the operating member 37, but the movement of the second slider 48 is locked by the lock member 55. Therefore, even if the operating member 37 is operated when the identification code of the transmitter 75 is not authenticated, the operating member 37 is prevented from being damaged while maintaining the lock by the lock member 55.

The controller 74 determines whether the cap 36 is located at the closed position or the open position based on the signal from the sensor 54. When the power switch 72 is turned on while the cap 36 is located at the open position, the controller 74 issues the alarm from the alarm device 73.

In the straddled vehicle 1 according to the present embodiment described above, the slider 44 moves by being pressed by the operating member 37 operated by a rider or person. Therefore, the solenoid 53 can be downsized as compared with the case where the slider 44 is moved by the solenoid 53. Further, the switch 63 is arranged below the movable body 61. Therefore, the sensor 54 can be miniaturized by arranging the switch 63 and the movable body 61 compactly. Further, the operating member 37 and the slider 44 are attached to the cap 36. Therefore, the structure around the fuel tank 23 can be miniaturized as compared with the case where the operating member 37 and the slider 44 are arranged around the cap 36.

Further, when the movement of the slider 44 is detected, the lock member 55 moves to the release position. The slider 44 moves in conjunction with the operation of the operating member 37 attached to the cap 36. Therefore, a rider or person can perform both the unlocking of the cap 36 and the operation of opening the cap 36 after the unlocking of the cap 36 by operating the operating member 37. Thereby, the operability for opening the cap 36 can be improved.

Although one embodiment of the present invention has been described above, the present invention is not limited to the above embodiment, and various modifications can be made without departing from the gist of the invention.

The straddled vehicle 1 is not limited to the scooter, and may be another type of vehicle such as a moped. The structure of the straddled vehicle 1 is not limited to that of the above embodiment, and may be changed. The number of front wheels is not limited to one, and may be more than one. The number of rear wheels is not limited to one, and may be more than one. The structure of the vehicle body frame 2 is not limited to that of the above embodiment, and may be changed. For example, the shape of the main frame 12 may be changed.

The structure of the fuel cap unit 31 is not limited to that of the above embodiment, and may be changed. For example, the shape of the support 34 may be changed. The shape of the cap 36 may be changed. The shape of the operating member 37 may be changed. The shape of the slider 44 may be changed. The shape of the clutch member 49 may be changed. The clutch member 49 may be omitted. The shapes of the first slider 47 and the second slider 48 may be changed. The first slider 47 and the second slider 48 may be integrated with each other.

The structure of the solenoid 53 may be changed. For example, the shape of the lock member 55 may be changed. The structure of the sensor 54 may be changed. For example, the shape of the movable body 61 may be changed. The shape of the switch 63 may be changed.

### REFERENCE SIGNS LIST

5: Seat, 6: Power unit, 11: Head pipe, 21: Storage box, 23: Fuel tank, 27: Center cover, 33: Fuel filler port, 34: Support, 35: Hinge 36: Cap, 37: Operating member, 44: Slider, 47: First slider, 48: Second slider, 49: Clutch member, 45: First elastic member, 53: Solenoid, 54: Sensor, 56: Solenoid body, 61: Movable body, 62: Urging member, 63: Switch, 66: Shaft portion, 67: Arm portion, 71: Receiver, 72: Power switch, 73: Alarm device, 74: Controller, 340: Opening.

It will be appreciated that the embodiment(s) of the present invention hereinbefore described is/are given by way of example only, and is not intended to limit the scope of the invention in any way.

It will be appreciated that any of the features of any disclosed embodiment may be provided in combination with any of the features of the statements of invention given in the Summary of Invention and/or any of the other disclosed embodiments either individually or in combination.

It will be appreciated that the term `straddled vehicle' or `straddled motor vehicle' used herein, and as used in the art, is meant to include at least the following terms also used in the art:
straddled vehicle or motor vehicle, straddle-type vehicle or motor vehicle, saddle-straddling type vehicle or motor vehicle, and includes: motorcycles and motorbikes as well as motor tricycles, quad bikes and straddled

All Terrain Vehicles (ATVs), scooters, mopeds and snowmobiles.

## Claims

1. A straddled vehicle (1) comprising:
a fuel tank (23) comprising or including a fuel filler port (33);
a head pipe (11) arranged in front of the fuel tank;
a seat (5) at least partially arranged behind the fuel tank;
a storage box (21) arranged below the seat and behind the fuel tank;
a center cover (27) arranged between the head pipe and the seat, the center cover having a downwardly recessed shape between the fuel tank and the head pipe;
a power unit (6) arranged below the fuel tank;
a support (34) attached to the fuel tank, the support being arranged around the fuel filler port;
a hinge (35) connected to the support;
a cap (36) that is movably attached to the support to an open position and a closed position via the hinge, opens the fuel filler port at the open position, and closes the fuel filler port at the closed position;
an operating member (37) attached to the cap, the operating member being operable by a rider or person;
a slider (44) attached to the cap, the slider being configured to move from an engaged position to a disengaged position with respect to the support by being pressed by the operating member;
a solenoid (53) comprising or including a lock member that is movable to a lock position at which the lock member locks a movement of the slider and a release position at which the lock member unlocks the slider;
a sensor (54) that detects the movement of the slider from the engaged position to the disengaged position;
a receiver (71) that receives a signal indicative of an identification code unique to a transmitter (75) carried by a rider or person from the transmitter; and
a controller (74) that authenticates the identification code of the transmitter (75) based on the signal received by the receiver (71) wherein, when the identification code of the transmitter (75) is appropriate, the controller authenticates the identification code of the transmitter (75); moves
the lock member to the release position when the movement of the slider is detected by a signal from the sensor and the identification code of the transmitter (75) is authenticated by the controller, and holds
the lock member at the lock position responsive to the movement of the slider is detected but the identification code of the transmitter is not authenticated by the controller.

2. The straddled vehicle according to claim 1, wherein as seen in an axial direction of the fuel filler port, the entire slider is arranged within an outer shape of the support when the cap is located at the closed position.

3. The straddled vehicle according to claim 1 or 2, wherein the support comprises or includes a circular opening facing the fuel filler port, and as seen in the axial direction of the fuel filler port, the entire slider is arranged in the opening when the cap is located at the closed position and the slider is located at the disengaged position.

4. The straddled vehicle according to any one of claims 1 to 3, further comprising an elastic member (45, 46) that urges the slider towards the engaged position, wherein the elastic member is attached to the cap.

5. The straddled vehicle according to any one of claims 1 to 4, wherein the sensor comprises or includes a movable body (61) that moves according to the movement of the slider, and a switch (63) arranged below the movable body, the switch being configured to be operated by the movable body.

6. The straddled vehicle according to claim 5, wherein the movable body overlaps with the switch as seen in the axial direction of the fuel filler port.

7. The straddled vehicle according to claim 5 or 6, wherein the movable body comprises or includes:
a shaft portion (66) extending in a moving direction of the slider, and
an arm portion (67) extending downward from the shaft portion, the arm portion being configured to press the switch.

8. The straddled vehicle according to any one of claims 5 to 7, wherein the entire switch is arranged within the outer shape of the support as seen in the axial direction of the fuel filler port.

9. The straddled vehicle according to any one of claims 1 to 8, wherein:
the solenoid comprises or includes a main body,
the lock member protrudes from the main body, and
the main body is arranged within the outer shape of the support as seen in the axial direction of the fuel filler port.

10. The straddled vehicle according to any one of claims 1 to 9, wherein as seen in the axial direction of the fuel filler port, the solenoid overlaps with the cap when the cap is located at the closed position.

11. The straddled vehicle according to any one of claims 1 to 10, wherein the slider comprises or includes:
a first slider (47) configured to be pressed by the operating member,
a second slider (48) that is provided separately from the first slider, engages to the support when the slider is located at the engaged position, and is locked by the lock member at the lock position, and
a clutch member (49) attached to the first slide, the clutch member being configured to slide with respect to the second slider when the second slider is locked, and engage to the second slider to move the second slider together with the first slider when the second slider is unlocked.

12. The straddled vehicle according to claim 11, wherein the sensor detects a movement of the first slider.

13. The straddled vehicle according to claim 11 or 12, wherein the second slider starts moving later than the first slider when the slider moves toward the disengaged position.

14. The straddled vehicle according to any one of claims 1 to 13, further comprising:
a power switch (72) that switches a power of the straddled vehicle on and off, and
an alarm device (73) that issues an alarm, wherein
the controller is further configured to:
determine whether the cap is located at the closed position or the open position based on a signal from the sensor, and
control the alarm device to issue the alarm when the power switch is turned on while the cap is located at the open position.

## Patentansprüche

1. Grätschsitzfahrzeug (1), das Folgendes umfasst:
einen Kraftstofftank (23), der eine Kraftstoffeinfüllöffnung (33) umfasst oder einschließt;
ein Kopfrohr (11), das vor dem Kraftstofftank angeordnet ist;
einen Sitz (5), der mindestens teilweise hinter dem Kraftstofftank angeordnet ist;
einen Staukasten (21), der unterhalb des Sitzes und hinter dem Kraftstofftank angeordnet ist;
eine Mittelabdeckung (27), die zwischen dem Kopfrohr und dem Sitz angeordnet ist, wobei die Mittelabdeckung zwischen dem Kraftstofftank und dem Kopfrohr eine nach unten ausgesparte Form aufweist;
eine Antriebseinheit (6), die unter dem Kraftstofftank angeordnet ist;
einen Halter (34), der an dem Kraftstofftank befestigt ist, wobei der Halter um die Kraftstoffeinfüllöffnung angeordnet ist;
ein Scharnier (35), das mit dem Halter verbunden ist;
einen Deckel (36), der über das Scharnier zu einer offenen Position und einer geschlossenen Position beweglich an dem Halter angebracht ist, der die Kraftstoffeinfüllöffnung in der offenen Position öffnet, und die Kraftstoffeinfüllöffnung in der geschlossenen Position schließt;
ein Betätigungselement (37), das an dem Deckel angebracht ist, wobei das Betätigungselement durch einen Fahrer oder eine Person betätigt werden kann;
einen Schieber (44), der an dem Deckel angebracht ist, wobei der Schieber dafür konfiguriert ist, sich dadurch, dass er durch das Betätigungselement gedrückt wird, in Bezug auf den Halter von einer eingerückten Position zu einer ausgerückten Position zu bewegen;
eine Zylinderspule (53), die ein Arretierungselement umfasst oder einschließt, das zu einer Arretierungsposition, bei der das Arretierungselement eine Bewegung des Schiebers arretiert, und einer Freigabeposition, in der das Arretierungselement den Schieber entsperrt, beweglich ist;
einen Sensor (54), der die Bewegung des Schiebers von der eingerückten Position zu der ausgerückten Position erfasst;
einen Empfänger (71), der ein Signal, das einen Identifizierungscode angibt, der einzigartig für einen durch einen Fahrer oder eine Person getragenen Sender (75) ist, von dem Sender empfängt; und
eine Steuerung (74), die den Identifizierungscode des Senders (75) auf Grundlage des durch den Empfänger (71) empfangenen Signals authentifiziert, wobei, wenn der Identifizierungscode des Senders (75) passend ist, die Steuerung den Identifizierungscode des Senders (75) authentifiziert, das Arretierungselement zu der Freigabeposition bewegt, wenn die Bewegung des Schiebers durch ein Signal von dem Sensor erfasst wird und der Identifizierungscode des Senders (75) durch die Steuerung authentifiziert wird, und als Reaktion darauf, dass die Bewegung des Schiebers erfasst wird, aber der Identifizierungscode des Senders nicht durch die Steuerung authentifiziert wird, das Arretierungselement in der Arretierungsposition hält.

2. Grätschsitzfahrzeug nach Anspruch 1, wobei, gesehen in einer axialen Richtung de Kraftstoffeinfüllöffnung, der gesamte Schieber innerhalb einer äußeren Form des Halters angeordnet ist, wenn sich der Deckel in der geschlossenen Position befindet.

3. Grätschsitzfahrzeug nach Anspruch 1 oder 2, wobei der Halter eine kreisförmige Öffnung umfasst oder einschließt, die der Kraftstoffeinfüllöffnung gegenüberliegt, und, gesehen in der axialen Richtung der Kraftstoffeinfüllöffnung, der gesamte Schieber in der Öffnung angeordnet ist, wenn sich der Deckel in der geschlossenen Position befindet und sich der Schieber in der ausgerückten Position befindet.

4. Grätschsitzfahrzeug nach einem der Ansprüche 1 bis 3, das ferner ein elastisches Element (45, 46) umfasst, das den Schieber hin zu der eingerückten Position drängt, wobei das elastische Element an dem Deckel angebracht ist.

5. Grätschsitzfahrzeug nach einem der Ansprüche 1 bis 4, wobei der Sensor einen beweglichen Körper (61), der sich entsprechend der Bewegung des Schiebers bewegt, und einen Schalter (63), der unterhalb des beweglichen Körpers angeordnet ist, umfasst oder einschließt, wobei der Schalter dafür konfiguriert ist, durch den beweglichen Körper betätigt zu werden.

6. Grätschsitzfahrzeug nach Anspruch 5, wobei, gesehen in der axialen Richtung der Kraftstoffeinfüllöffnung, sich der bewegliche Körper mit dem Schalter überlappt.

7. Grätschsitzfahrzeug nach Anspruch 5 oder 6, wobei der bewegliche Körper Folgendes umfasst oder einschließt:
einen Wellenabschnitt (66), der sich in einer Bewegungsrichtung des Schiebers erstreckt, und
einen Armabschnitt (67), der sich von dem Wellenabschnitt aus nach unten erstreckt, wobei der Armabschnitt dafür konfiguriert ist, den Schalter zu drücken.

8. Grätschsitzfahrzeug nach einem der Ansprüche 5 bis 7, wobei, gesehen in der axialen Richtung der Kraftstoffeinfüllöffnung, der gesamte Schalter innerhalb der äußeren Form des Halters angeordnet ist.

9. Grätschsitzfahrzeug nach einem der Ansprüche 1 bis 8, wobei:
die Zylinderspule einen Hauptkörper umfasst oder einschließt,
das Arretierungselement von dem Hauptkörper aus vorspringt und
der Hauptkörper, gesehen in der axialen Richtung der Kraftstoffeinfüllöffnung, innerhalb der äußeren Form des Halters angeordnet ist.

10. Grätschsitzfahrzeug nach einem der Ansprüche 1 bis 9, wobei, gesehen in der axialen Richtung der Kraftstoffeinfüllöffnung, sich die Zylinderspule mit dem Deckel überlappt, wenn sich der Deckel in der geschlossenen Position befindet.

11. Grätschsitzfahrzeug nach einem der Ansprüche 1 bis 10, wobei der Schieber Folgendes umfasst oder einschließt:
einen ersten Schieber (47), der dafür konfiguriert ist, durch das Betätigungselement gedrückt zu werden,
einen zweiten Schieber (48), der gesondert von dem ersten Schieber bereitgestellt wird, der an dem Halter einrückt, wenn sich der Schieber in der eingerückten Position befindet, und durch das Arretierungselement in der Arretierungsposition arretiert wird, und
ein Kupplungselement (49), das an dem ersten Schieber angebracht ist, wobei das Kupplungselement dafür konfiguriert ist, sich in Bezug auf den zweiten Schieber zu verschieben, wenn der zweite Schieber arretiert ist, und an dem zweiten Schieber einzurücken, um den zweiten Schieber zusammen mit dem ersten Schieber zu bewegen, wenn der zweite Schieber entsperrt ist.

12. Grätschsitzfahrzeug nach Anspruch 11, wobei der Sensor eine Bewegung des ersten Schiebers erfasst.

13. Grätschsitzfahrzeug nach Anspruch 11 oder 12, wobei der zweite Schieber sich später zu bewegen beginnt als der erste Schieber, wenn sich der Schieber hin zu der ausgerückten Position bewegt.

14. Grätschsitzfahrzeug nach einem der Ansprüche 1 bis 13, das ferner Folgendes umfasst:
einen Leistungsschalter (72), der eine Leistung des Grätschsitzfahrzeugs ein- und ausschaltet, und
eine Warneinrichtung (73), die eine Warnung ausgibt, wobei
die Steuerung ferner zu Folgendem konfiguriert ist:
auf Grundlage eines Signals von dem Sensor festzustellen, ob sich der Deckel in der geschlossenen Position oder der offenen Position befindet, und
die Warneinrichtung zu steuern, um die Warnung auszugeben, wenn der Leistungsschalter eingeschaltet wird, während sich der Deckel in der offenen Position befindet.

## Revendications

1. Véhicule à enfourcher (1) comprenant :
un réservoir de carburant (23) comprenant ou incluant un orifice de remplissage de carburant (33) ;
un tuyau de tête (11) agencé à l'avant du réservoir de carburant ;
un siège (5) au moins partiellement agencé derrière le réservoir de carburant ;
une boîte de stockage (21) agencée sous le siège et derrière le réservoir de carburant ;
un couvercle central (27) agencé entre le tuyau de tête et le siège, le couvercle central présentant une forme évidée vers le bas entre le réservoir de carburant et le tuyau de tête ;
une unité de puissance (6) agencée sous le réservoir de carburant ;
un support (34) fixé au réservoir de carburant, le support étant agencé autour de l'orifice de remplissage de carburant ;
une charnière (35) raccordée au support ;
un capuchon (36) qui est fixé de manière mobile au support dans une position ouverte et une position fermée par le biais de la charnière, qui ouvre l'orifice de remplissage de carburant dans la position ouverte et ferme l'orifice de remplissage de carburant dans la position fermée ;
un élément d'actionnement (37) fixé au capuchon, l'élément d'actionnement pouvant être actionné par un pilote ou par une personne ;
un curseur (44) fixé au capuchon, le curseur étant configuré pour se déplacer d'une position de prise à une position libérée par rapport au support, en étant comprimé par l'élément d'actionnement ;
un solénoïde (53) comprenant ou incluant un élément de verrouillage qui est mobile vers une position de verrouillage dans laquelle l'élément de verrouillage bloque un mouvement du curseur et une position de libération dans laquelle l'élément de verrouillage débloque le curseur ;
un capteur (54) qui détecte le mouvement du curseur de la position de prise à la position libérée ;
un récepteur (71) qui reçoit un signal indiquant un code d'identification unique à un émetteur (75) porté par un pilote ou une personne depuis l'émetteur ; et
un dispositif de commande (74) qui authentifie le code d'identification de l'émetteur (75) sur la base du signal reçu par le récepteur (71) dans lequel, quand le code d'identification de l'émetteur (75) est approprié, le dispositif de commande authentifie le code d'identification de l'émetteur (75), déplace l'élément de verrouillage dans la position de libération quand le mouvement du curseur est détecté par un signal provenant du capteur et le code d'identification de l'émetteur (75) est authentifié par le dispositif de commande, et maintient l'élément de verrouillage dans la position de verrouillage en réponse au mouvement du curseur détecté mais le code d'identification de l'émetteur n'est pas authentifié par le dispositif de commande.

2. Véhicule à enfourcher selon la revendication 1, dans lequel, comme vu dans la direction axiale de l'orifice de remplissage de carburant, l'ensemble du curseur est agencé à l'intérieur d'une forme extérieure du support lorsque le capuchon est situé dans la position fermée.

3. Véhicule à enfourcher selon la revendication 1 ou 2, dans lequel le support comprend ou inclut une ouverture circulaire faisant face à l'orifice de remplissage de carburant et comme vu dans la direction axiale de l'orifice de remplissage de carburant, l'ensemble du curseur est agencé dans l'ouverture quand le capuchon est situé dans la position fermée et le curseur est situé dans la position libérée.

4. Véhicule à enfourcher selon l'une quelconque des revendications 1 à 3, comprenant en outre un élément élastique (45, 46) qui pousse le curseur vers la position de prise, dans lequel l'élément élastique est fixé au capuchon.

5. Véhicule à enfourcher selon l'une quelconque des revendications 1 à 4, dans lequel le capteur comprend ou inclut un corps mobile (61) qui bouge selon le mouvement du curseur, et un commutateur (63) agencé sous le corps mobile, le commutateur étant configuré pour être actionné par le corps mobile.

6. Véhicule à enfourcher selon la revendication 5, dans lequel le corps mobile chevauche le commutateur comme vu dans la direction axiale de l'orifice de remplissage de carburant.

7. Véhicule à enfourcher selon la revendication 5 ou 6, dans lequel le corps mobile comprend ou inclut :
une partie d'arbre (66) s'étendant dans une direction de mouvement du curseur, et
une partie de bras (67) s'étendant vers le bas depuis la partie d'arbre, la partie de bras étant configurée pour appuyer sur le commutateur.

8. Véhicule à enfourcher selon l'une quelconque des revendications 5 à 7, dans lequel l'ensemble du commutateur est agencé à l'intérieur de la forme extérieure du support comme vu dans la direction axiale de l'orifice de remplissage de carburant.

9. Véhicule à enfourcher selon l'une quelconque des revendications 1 à 8, dans lequel :
le solénoïde comprend ou inclut un corps principal,
l'élément de verrouillage fait saillie du corps principal, et
le corps principal est agencé à l'intérieur de la forme extérieure du support comme vu dans la direction axiale de l'orifice de remplissage de carburant.

10. Véhicule à enfourcher selon l'une quelconque des revendications 1 à 9, dans lequel, comme vu dans la direction axiale de l'orifice de remplissage de carburant, le solénoïde chevauche le capuchon quand le capuchon est situé dans la position fermée.

11. Véhicule à enfourcher selon l'une quelconque des revendications 1 à 10, dans lequel le curseur comprend ou inclut :
un premier curseur (47) configuré pour être comprimé par l'élément d'actionnement,
un second curseur (48) qui est fourni séparément du premier curseur, se met en prise avec le support quand le curseur est situé dans la position de prise, et est verrouillé par l'élément de verrouillage dans la position de verrouillage, et
un élément d'embrayage (49) fixé au premier curseur, l'élément d'embrayage étant configuré pour coulisser par rapport au second curseur quand le second curseur est verrouillé, et pour se mettre en prise avec le second curseur pour déplacer le second curseur ensemble avec le premier curseur lorsque le second curseur est déverrouillé.

12. Véhicule à enfourcher selon la revendication 11, dans lequel le capteur détecte un mouvement du premier curseur.

13. Véhicule à enfourcher selon la revendication 11 ou 12, dans lequel le second curseur commence à bouger après le premier curseur quand le curseur se déplace vers la position libérée.

14. Véhicule à enfourcher selon l'une quelconque des revendications 1 à 13, comprenant en outre :
un interrupteur d'alimentation (72) qui permet d'allumer et d'éteindre une alimentation du véhicule à enfourcher, et
un dispositif d'alarme (73) qui émet une alarme, dans lequel
le dispositif de commande est en outre configuré pour :
déterminer si le capuchon est situé dans la position fermée ou la position ouverte sur la base d'un signal provenant du capteur, et
commander le dispositif d'alarme pour qu'il émette l'alarme quand l'interrupteur d'alimentation est activé pendant que le capuchon est situé dans la position ouverte.
